# FASCICULE DE BREVET EUROPEEN

(11) **EP 3 314 117 B1**
(45) Date de publication et mention de la délivrance du brevet: **07.08.2019**
(21) Numéro de dépôt: 16745782.9
(22) Date de dépôt: 24.06.2016
(51) Int. Cl.: F03D 3/06, F03D 15/00

(54) **TURBINE À PORTANCE ACTIVE À DÉPLACEMENT CONTRÔLÉ**
TURBINE MIT AKTIVEM HUB MIT GESTEUERTER VERDRÄNGUNG
CONTROLLED-DISPLACEMENT ACTIVE LIFT TURBINE

(30) Priorité: 25.06.2015 FR 1555859
(43) Date de publication de la demande: 02.05.2018
(73) Titulaire: Lecanu, Pierre, 14400 Esquay sur Seulles (FR); Breard, Joël, 14750 Saint Aubin Sur Mer (FR); Sauton, Olivier, 50430 Lessay (FR)
(72) Inventeur: LECANU, Pierre, 14400 Esquay sur Seulles (FR)
(74) Mandataire: Cabinet HERRBURGER
(86) Numéro de dépôt international: PCT/FR2016/051565
(87) Numéro de publication internationale: WO 2016/207574

(56) Documents cités:
- WO-A1-2015/071863
- FR-A1- 2 919 686
- KR-A- 20130 026 490

## Description

La présente invention a pour objet une turbine à portance active à déplacement contrôlé.

Les spécialistes cherchent depuis longtemps à récupérer l'énergie éolienne qui a l'avantage d'être propre, c'est-à-dire de ne pas engendrer de pollution thermique ou chimique, et parallèlement d'être inépuisable.

Ces avantages sont toutefois compensés dans une large mesure par une série d'inconvénients, liés en particulier au caractère dispersé et intermittent du vent.

Il est en outre bien connu que les « parcs » d'éoliennes consomment beaucoup d'espace et ne fonctionnent pas sans nuisances sonores.

A ces nuisances sonores s'ajoutent des problèmes écologiques, notamment consécutifs aux risques encourus par les oiseaux à proximité des éoliennes.

Ces inconvénients font que le marché des éoliennes n'a pas connu ces dernières années l'essor auquel on aurait pu s'attendre, de sorte que les perspectives de développement dans ce domaine sont aujourd'hui très larges.

La majeure partie des éoliennes commerciales raccordées au réseau comporte un rotor en forme d'hélice soumis à l'action du vent et monté sur un axe horizontal, lui-même fixé à un mât vertical, ainsi qu'une génératrice qui coopère avec le rotor pour fournir de l'énergie électrique.

De telles éoliennes sont particulièrement performantes mais présentent un certain nombre d'inconvénients parmi lesquels on peut mentionner l'obligation de leur adjoindre un mécanisme d'orientation ayant pour fonction d'orienter le rotor dans la direction du vent.

De plus, la génératrice ainsi que les organes qui lui sont associés (multiplicateur, système de régulation électrique...) doivent obligatoirement être montés à la partie supérieure du mât, ce qui entraîne différentes contraintes.

Pour remédier à ces inconvénients, les spécialistes ont cherché à développer des éoliennes d'axe essentiellement vertical, en particulier de type Darrieus.

De telles éoliennes comportent au moins deux, de préférence trois ailes de rotor profilées, actionnées par le vent et reliées à un axe central essentiellement vertical par des bras de liaison ainsi qu'une génératrice coopérant avec les ailes de rotor pour fournir de l'énergie électrique.

Ces éoliennes ont en règle générale un profil de type dit « naca ».

Elles présentent l'avantage de ne pas avoir à être orientées dans la direction du vent et de permettre de placer la génératrice et les organes associés à terre, mais ne sont pas dénuées d'inconvénients en particulier du fait qu'elles ne démarrent pas automatiquement, ce qui n'est toutefois que peu contraignant dans le cas d'une éolienne raccordée au réseau, compte tenu du fait qu'il est alors possible d'utiliser la génératrice comme un moteur absorbant du courant du réseau pour démarrer l'éolienne.

Toutefois, l'inconvénient majeur qui a jusqu'à présent freiné le développement des éoliennes d'axe essentiellement vertical est lié à leur faible efficacité qui est une conséquence directe de leur principe de fonctionnement.

En effet, le fonctionnement d'une éolienne d'axe essentiellement vertical repose sur l'effet de portance subi par les ailes de rotor profilées soumises à l'action d'un vent apparent dont la vitesse correspond à la résultante de la vitesse tangentielle de l'aile de rotor et de la vitesse réelle du vent.

L'effort aérodynamique (force induite) qui s'exerce sur une aile de rotor est pratiquement normal au vent apparent.

Cette force induite peut se décomposer en une force axiale ou tangentielle dénommée traînée dans le domaine aéronautique et en une force normale ou portance perpendiculaire à celle-ci.

Le couple moteur s'exerçant sur chacune des ailes de rotor correspond ainsi au produit du rayon de l'éolienne par cette force axiale.

Par suite, la force normale ou portance de la force induite qui est beaucoup plus importante n'est pas récupérée.

Il en résulte qu'une éolienne d'axe essentiellement vertical même très performante ne peut tout au plus que récupérer 50 % de la puissance disponible du vent.

Pour remédier à cet inconvénient, on a déjà proposé des turbines d'axe essentiellement vertical à portance active.

On a en particulier déjà proposé une turbine telle qu'une éolienne d'axe essentiellement vertical comportant au moins deux de préférence trois ailes de rotor profilées actionnées par un fluide hydraulique, notamment par le vent et reliées à un axe central essentiellement vertical par des bras de liaison ainsi que des moyens d'activation permettant de récupérer l'énergie mécanique des composantes normales ou portance des forces induites par le fluide hydraulique, notamment par le vent apparent et coopérant avec des moyens telles qu'une génératrice permettant de transformer l'énergie mécanique ainsi récupérée en énergie électrique.

Selon le document EP 2 183 479 ou FR2 919 686, de tels moyens d'activation sont constitués par des générateurs linéaires dont les noyaux sont respectivement solidaires des ailes de rotor associées.

Or, de tels générateurs linéaires ne sont pas sans présenter des inconvénients dans la mesure où leur rendement est faible ; de plus la récupération de l'énergie à partir de tels moteurs est complexe du fait qu'ils ont un mouvement de rotation par rapport à l'axe de rotation de la turbine, ce qui oblige à leur associer des éléments onéreux tels que par exemple un connecteur tournant.

Pour remédier à ces inconvénients, on a également déjà proposé, conformément au document non publié FR 14 50334, une turbine à portance active du type susmentionné dans laquelle les bras de liaison sont équipés de moyens d'activation autres que des générateurs linéaires.

Selon ce document, une telle turbine à portance active comprend des organes d'activation linéaires associés à chacune des ailes de rotor qui subissent un mouvement de translation alternatif lors de chaque rotation de la turbine et des organes de conversion qui permettent de transformer ce mouvement de translation alternatif en un mouvement centré sur l'axe de rotation de la turbine de façon à permettre de récupérer l'énergie mécanique des composantes normales ou portance des forces induites par le fluide hydraulique pour pouvoir la transformer en énergie électrique.

Les organes de conversion sont plus précisément constitués par un galet stationnaire centré sur l'axe de la turbine et coopérant avec des galets satellites respectivement associés à chacune des ailes de rotor, solidaires du galet stationnaire et tournant autour de ce galet.

Les organes d'activation linéaires associés à chacune des ailes de rotor sont quant à eux constitués par une bielle articulée, d'une part à l'une de ses extrémités ou première extrémité sur le galet satellite associé à cette aile de rotor, en un point de ce galet situé sur sa périphérie, et d'autre part à son autre extrémité ou seconde extrémité à une extrémité d'un coulisseau mobile en translation le long du bras de liaison et dont l'autre extrémité est fixée à l'aile de rotor associée.

Malgré ses performances globalement satisfaisantes, une telle turbine à portance active présente un inconvénient consécutif au fait que le mouvement de translation radial d'une aile de rotor lié à la rotation du pignon satellite associé autour du pignon stationnaire crée une vitesse de translation transversale de nature à réduire l'angle d'incidence, c'est-à-dire l'angle entre la vitesse de rotation tangentielle de l'aile de rotor et le vent apparent et par suite la force induite s'exerçant sur cette aile de rotor qui est essentiellement perpendiculaire au vent apparent et dépend de l'angle d'incidence et de la vitesse du vent.

La présente invention a pour objet de proposer une turbine telle qu'éolienne à portance active à déplacement contrôlé du type susmentionné de nature à remédier à cet inconvénient.

Selon l'invention, une telle turbine est caractérisée en ce que la distance entre l'axe de rotation de la turbine et le point de fixation du coulisseau sur l'aile de rotor associée est contrôlée et est notamment essentiellement constante au cours de la rotation de la turbine alors que la distance entre le centre du galet satellite et l'axe de rotation de la turbine varie au cours de la rotation du galet satellite autour du galet stationnaire.

Selon l'invention, deux variantes peuvent être envisagées pour permettre de maintenir constante la distance susmentionnée.

Selon la première de ces variantes, le centre du galet stationnaire est décalé par rapport à l'axe de rotation de la turbine.

Selon la seconde variante, le galet stationnaire et/ou les galets satellites est(sont) constitué(s) par une(des) came(s) de forme non circulaire.

Une combinaison de ces deux variantes peut également être envisagée.

Selon l'invention, le galet stationnaire et les galets satellites associés à chacune des ailes de rotor sont en règle générale constitués par des pignons.

Selon l'invention, le mouvement de translation du coulisseau est de préférence guidé par une glissière solidaire du bras de liaison associé.

Les bras de liaison ne sont ainsi pas reliés aux ailes de rotor associées directement, mais indirectement par l'intermédiaire des coulisseaux qui se déplacent en translation en va-et-vient.

De manière plus précise, lors de la rotation de la turbine sous l'action du fluide hydraulique, les coulisseaux et les bielles se déplacent successivement entre une position déployée et une position repliée en entraînant la rotation des pignons satellites associés autour du pignon stationnaire.

Les pignons satellites associés à chacune des ailes de rotor sont avantageusement montés sur un même plateau centré sur le centre géométrique du galet stationnaire qui n'est pas confondu avec l'axe de rotation de la turbine et mobiles en rotation par rapport à un axe secondaire passant par ce centre géométrique.

Cet axe secondaire permet d'entraîner une génératrice électrique ou un mécanisme autre tel qu'une pompe.

De même, l'axe de rotation de la turbine permet d'entraîner une génératrice électrique ou un mécanisme autre tel qu'une pompe.

L'axe secondaire non confondu avec l'axe de rotation de la turbine permet de récupérer les forces de portance tandis que l'axe de rotation de la turbine permet de récupérer les forces de traînée.

Ces forces de portance et de traînée sont générées sur les ailes de rotor par le fluide hydraulique.

Les forces de traînée tangentielles sont en effet classiquement récupérées au niveau de l'axe de rotation de la turbine par l'intermédiaire des bras de liaison tandis que les forces de portance normales sont récupérées par l'intermédiaire des ensembles coulisseaux/bielles/pignons satellites au niveau de l'axe secondaire qui n'est pas coaxial à l'axe de rotation de la turbine.

Les caractéristiques de la turbine à portance active à déplacement contrôlé qui fait l'objet de l'invention seront décrites plus en détail en se référant aux dessins non limitatifs annexés dans lesquels :
- la figure 1 est un schéma illustratif d'une turbine à portance active conforme à la première variante de l'invention,
- la figure 2 est un schéma illustratif des forces s'exerçant sur les ailes de rotor d'une turbine classique
- la figure 3 est un schéma représentant les forces s'exerçant sur une turbine à portance active telle que décrite dans le document non publié FR 14 50334,
- la figure 4 est un schéma correspondant à la figure 3 mais représentant une turbine conforme à la première variante de l'invention,
- la figure 5 est un schéma illustrant une autre variante de turbine à portance active.

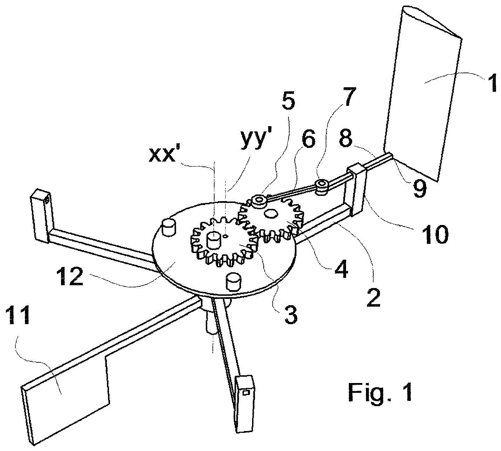

Selon la figure 1, la turbine à portance active comporte trois ailes de rotor profilées 1 dont une seule est représentée qui sont reliées indirectement à l'axe de rotation de la turbine x-x' par des bras de liaison 2, ce par l'intermédiaire de moyens d'activation qui permettent de récupérer l'énergie mécanique de la portance P des forces F induites par le fluide hydraulique.

Ces moyens d'activation comportent un pignon stationnaire central 3 dont le centre géométrique A est décalé par rapport à l'axe de rotation x, x' de la turbine ainsi que trois pignons satellites 4 de même rayon engrenant avec ce pignon stationnaire central 3 de façon à tourner autour de celui-ci.

Un galet satellite 4 est associé à chacune des ailes de rotor 1 et à chacun des bras de liaison 2.

Dans un but de clarté, seuls sont représentés sur la figure 1 un pignon satellite 4 et les éléments de liaison de ce pignon satellite 4 et de l'aile de rotor 1 associée.

Il va de soi que ces éléments de liaison sont identiques pour les trois pignons satellites 4 et les trois ailes de rotor 1.

Selon la figure 1, le pignon satellite 4 est équipé sur sa périphérie d'une pige cylindrique 5 sur laquelle est articulée une bielle 6 par une première de ses extrémités.

La bielle 6 est en outre articulée au niveau de sa seconde extrémité 7 à une extrémité d'un coulisseau 8 dont l'autre extrémité 9 est fixée à l'aile de rotor 1.

Le coulisseau 8 est mobile en va et vient le long du bras de liaison 2.

Cette translation du coulisseau 8 est guidée par une glissière 10 fixée solidairement sur ce bras de liaison 2.

La bielle 6 exerce ainsi en permanence un effort moteur sur le pignon satellite 4 de façon à l'entrainer en rotation.

Selon la figure 1, les trois pignons satellites 4 sont montés sur un même plateau 12 centré sur le centre géométrique A du pignon stationnaire 3 et mobile en rotation autour d'un axe secondaire y, y' passant par ce centre géométrique A.

L'axe y, y' de ce plateau rotatif 12 permet d'entrainer une génératrice électrique non représentée.

Lors de la rotation de la turbine sous l'action du fluide hydraulique, les coulisseaux 8 et les bielles 6 se déplacent successivement entre une position déployée sur un demi-tour et une position repliée sur un demi-tour en entrainant la rotation des pignons satellites 4 associés autour du pignon stationnaire central 3.

Le mouvement de translation en va et vient des bielles 6 et des coulisseaux 8 est transformé en un mouvement de rotation de l'axe du plateau rotatif 12 centré sur l'axe secondaire y, y'.

Une gouverne 11 centrée sur l'axe de rotation x, x' de la turbine permet de positionner correctement le pignon stationnaire 3 vis-à-vis du fluide hydraulique.

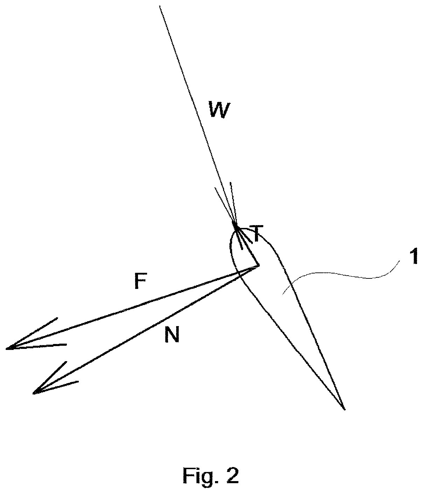

Selon la figure 2, une aile de rotor 1 d'une turbine classique est soumise à l'action d'un vent apparent W.

Ce vent apparent crée sur le profil d'aile 1 une force induite F qui est essentiellement perpendiculaire à la direction du vent apparent W.

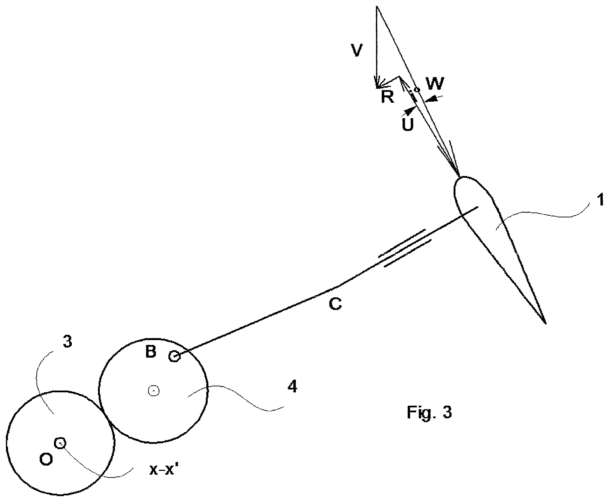

Cette force induite F se décompose en une force tangentielle T (ou traînée) et en une force normale N (ou portance)
Selon la figure 3, la vitesse apparente W correspond à la résultante de la vitesse du vent réel V, de la vitesse tangentielle U des ailes du rotor 1 et de la composante transversale R, créée par le mouvement de translation radiale de l'aile du rotor 1 lié à la rotation du pignon satellite 4 associé autour du pignon stationnaire 3.

La valeur de la force induite F dépend de l'angle d'incidence i entre le vent apparent W et la vitesse tangentielle U de l'aile de rotor 1.

Or la présence de la composante R, liée à la translation radiale de l'aile de rotor 1 est de nature à réduire la valeur de l'angle d'incidence i et donc la valeur de la force induite F.

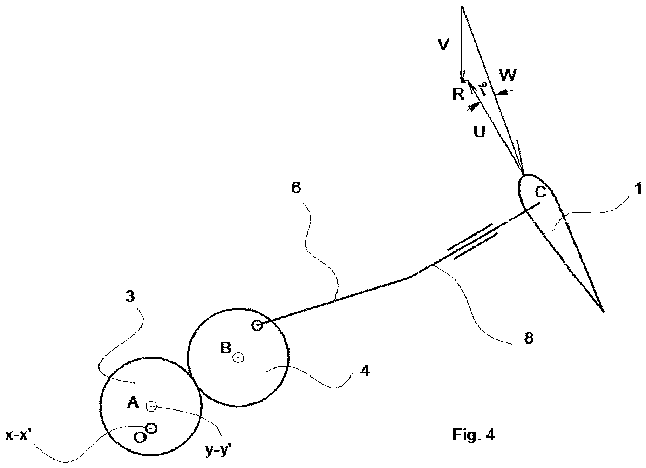

Selon la figure 4, on peut réduire, annuler ou inverser la direction de la composante transversale R en maintenant essentiellement constante au cours de la rotation de la turbine la distance entre l'axe de rotation x, x' de la turbine (point 0) et le point de fixation C du coulisseau 8 sur l'aile de rotor 1 associée, alors que la distance entre le centre B du pignon satellite 4 et l'axe de rotation x, x' de la turbine (point O) varie au cours d'une rotation.

Une autre possibilité non représentée sur les figures consiste à réaliser le pignon stationnaire et/ou le pignon satellite 4 sous la forme d'une ou deux cames non circulaires.

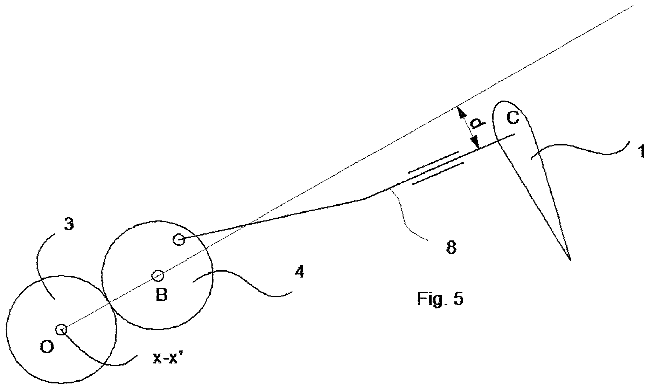

Selon figure 5, pour optimiser ou réduire les vibrations, il est possible de décaler angulairement d'un angle d l'axe du coulisseau 8 par rapport à l'axe O-B reliant les deux centres géométriques des pignons 3 et 4.

### NOMENCLATURE

- 1: Ailes de rotor
- 2: Bras de liaison
- 3: Pignon stationnaire central
- 4: Pignons satellites
- 5: Pige cylindrique
- 6: Bielle
- 7: Seconde extrémité
- 8: Coulisseau
- 9: Autre extrémité
- 10: Glissière
- 11: Gouverne
- 12: Plateau tournant

- V: Vent réel
- W: Vent apparent
- u: Vitesse tangentielle
- R: Composante transversale
- F: Force induite
- P: Portance
- T: Trainée

- i: Angle d'incidence
- A: Centre géométrique du pignon stationnaire
- B: Centre du galet satellite
- C: Point de fixation du coulisseau sur l'aile de rotor
- O: Centre de rotation de la turbine
- x, x': Axe de rotation de la turbine
- y, y': Axe secondaire

## Revendications

1. Turbine telle qu'éolienne comportant au moins deux, de préférence trois ailes de rotor profilées actionnées par un fluide hydraulique, notamment par le vent, et reliées à un axe central essentiellement vertical par des bras de liaison ainsi que des organes d'activation linéaires associés à chacune des ailes de rotor qui subissent un mouvement de translation alternatif lors de chaque rotation de la turbine et des organes de conversion qui permettent de transformer ce mouvement de translation alternatif en un mouvement centré sur l'axe de la turbine, de façon à permettre de récupérer l'énergie mécanique des composantes normales ou portance des forces induites par le fluide hydraulique pour pouvoir les transformer en énergie électrique, turbine dans laquelle les organes de conversion sont constitués par un galet de récupération d'énergie stationnaire (3) monté sur l'axe de rotation de la turbine (x, x') et coopérant avec des galets satellites (4) respectivement associés à chacune des ailes de rotor, solidaires du galet stationnaire (3) et tournant autour de ce galet, et les organes d'activation linéaires associés à chacune des ailes de rotor (1) sont constitués par une bielle (6) articulée d'une part à l'une de ses extrémités ou première extrémité sur le galet satellite (4) associé à cette aile de rotor (1), en un point de ce galet (4) situé sur sa périphérie et d'autre part, à son autre extrémité ou seconde extrémité, à une extrémité d'un coulisseau (8) mobile en translation le long du bras de liaison (2) et dont l'autre extrémité (C) est fixée à l'aile de rotor (1) associée,
**caractérisée en ce que**
la distance entre l'axe de rotation (x, x') de la turbine (point O) et le point de fixation (C) du coulisseau (8) sur l'aile de rotor (1) associée est contrôlée et est notamment essentiellement constante au cours de la rotation de la turbine alors que la distance entre le centre (B) du galet satellite (4) et l'axe de rotation (x, x') de la turbine (point O) varie au cours de la rotation du galet satellite (4) autour du galet stationnaire (3).

2. Turbine selon la revendication 1,
**caractérisée en ce que**
le galet stationnaire (3) et les galets satellites (4) associés à chacune des ailes de rotor (1) sont constitués par des pignons.

3. Turbine selon l'une quelconque des revendications 1 et 2,
**caractérisée en ce que**
le centre géométrique (A) du galet stationnaire (3) est décalé par rapport à l'axe de rotation (x, x') de la turbine.

4. Turbine selon la revendication 1,
**caractérisée en ce que**
le galet stationnaire (3) et/ou les galets satellites (4) est(sont) constitué(s) par une(des) came(s) de forme non circulaire.

## Patentansprüche

1. Turbine, wie Windturbine, die mindestens zwei, vorzugsweise drei Rotorflügel, die durch ein Hydraulikfluid, insbesondere durch den Wind, betätigt werden und mit einer im Wesentlichen vertikalen Zentralachse durch Verbindungsarme verbunden sind, sowie lineare Aktivierungsorgane umfasst, die mit jedem der Rotorflügel assoziiert sind und eine alternierende Translationsbewegung bei jeder Rotation der Turbine und der Umwandlungsorgane, die es ermöglichen, diese alternierende Translationsbewegung in eine auf die Achse der Turbine zentrierte Bewegung umzuwandeln, erfahren, um es zu ermöglichen, die mechanische Energie der Normal- oder Tragfähigkeitskomponenten der durch das Hydraulikfluid induzierten Kräfte zurückzugewinnen, um sie in elektrische Energie umzuwandeln, wobei die Umwandlungsorgane durch eine stationäre Rolle zur Energierückgewinnung (3) gebildet sind, die auf der Rotationsachse der Turbine (x, x') montiert ist und mit Satellitenrollen (4) zusammenwirkt, die jeweils mit jedem der Rotorflügel assoziiert sind, mit der stationären Rolle (3) fest verbunden sind, und sich um diese Rolle drehen, und wobei die linearen Aktivierungsorgane, die mit jedem der Rotorflügel (1) assoziiert sind, durch eine Kurbelstange (6) gebildet sind, die einerseits an einem ihrer Enden oder ersten Ende an der mit diesem Rotorflügel (1) assoziierten Satellitenrolle (4), an einem Punkt dieser Rolle (4), der auf ihrem Umfang angeordnet ist, und andererseits, an ihrem anderen Ende oder zweiten Ende, an einem Ende eines Stößels (8), der entlang des Verbindungsarms (2) verschiebbar ist und dessen anderes Ende (C) mit dem assoziierten Rotorflügel (1) verbunden ist, gelenkig verbunden ist,
**dadurch gekennzeichnet, dass**
der Abstand zwischen der Rotationsachse (x, x') der Turbine (Punkt 0) und dem an dem assoziierten Rotorflügel (1) angeordneten Befestigungspunkt (C) des Stößels (8) gesteuert ist und insbesondere im Wesentlichen bei der Rotation der Turbine konstant ist, während der Abstand zwischen dem Mittelpunkt (B) der Satellitenrolle (4) und der Rotationsachse (x, x') der Turbine (Punkt 0) bei der Rotation der Satellitenrolle (4) um die stationäre Rolle (3) variiert.

2. Turbine gemäß Anspruch 1,
**dadurch gekennzeichnet, dass**
die stationäre Rolle (3) und die Satellitenrollen (4), die mit jedem der Rotorflügel (1) assoziiert sind, durch Zahnräder gebildet sind.

3. Turbine gemäß einem der Ansprüche 1 oder 2,
**dadurch gekennzeichnet, dass**
der geometrische Mittelpunkt (A) der stationären Rolle (4) gegenüber der Rotationsachse (x, x') der Turbine versetzt ist.

4. Turbine gemäß Anspruch 1,
**dadurch gekennzeichnet, dass**
die stationäre Rolle (3) und/oder die Satellitenrollen (4) durch nicht kreisförmige Nocken gebildet sind.

## Claims

1. Turbine such as a wind turbine, comprising at least two, preferably three profiled rotor blades which are activated by a hydraulic fluid, in particular by the wind, and which are connected to a substantially vertical central axle by connection arms and linear activation members which are associated with each of the rotor blades and which are subjected to an alternating translation movement during each rotation of the turbine and conversion members which enable this alternating translation movement to be converted into a movement which is centred on the axle of the turbine, in order to enable the mechanical energy of the normal components or lift of the forces brought about by the hydraulic fluid to be recovered in order to be able to convert them into electrical energy, in which turbine the conversion members are constituted by a stationary energy recovery roller (3) which is mounted on the rotation axle (x, x') of the turbine and which cooperates with satellite rollers (4) which are associated with each of the rotor blades, respectively, and which are fixedly joined to the stationary roller (3) and which rotate about this roller, and the linear activation members associated with each of the rotor blades (1) are constituted by a connection rod (6) which is articulated, on the one hand, at one of the ends thereof or first end to the satellite roller (4) associated with this rotor blade (1), at a point of this roller (4) located on the periphery thereof and, on the other hand, at the other end thereof or second end, to an end of a sliding member (8) which can be moved in translation along the connection arm (2) and whose other end (C) is fixed to the associated rotor blade (1),
**characterised in that**
the distance between the rotation axle (x, x') of the turbine (point 0) and the fixing point (C) of the sliding member (8) on the associated rotor blade (1) is checked and is in particular substantially constant during the rotation of the turbine whilst the distance between the centre (B) of the satellite roller (4) and the rotation axle (x, x') of the turbine (point 0) varies during the rotation of the satellite roller (4) about the stationary roller (3).

2. Turbine according to claim 1,
**characterised in that**
the stationary roller (3) and the satellite rollers (4) associated with each of the rotor blades (1) are constituted by pinions.

3. Turbine according to either claim 1 or claim 2,
**characterised in that**
the geometric centre (A) of the stationary roller (3) is offset relative to the rotation axle (x, x') of the turbine.

4. Turbine according to claim 1,
**characterised in that**
the stationary roller (3) and/or the satellite rollers (4) is/are constituted by (a) roller(s) of non-circular form.
